# EUROPÄISCHE PATENTSCHRIFT

(11) **EP 0 954 946 B1**
(45) Veröffentlichungstag und Bekanntmachung des Hinweises auf die Patenterteilung: **07.11.2007**
(21) Anmeldenummer: 98904021.7
(22) Anmeldetag: 13.01.1998
(51) Int. Cl.: H04Q 11/04, H04L 12/64

(54) **VERFAHREN ZUM ÜBERTRAGEN VON SPRACHINFORMATIONEN IN ATM-ZELLEN**
METHOD FOR TRANSMITTING VOICE INFORMATION IN ATM CELLS
PROCEDE POUR TRANSMETTRE DES INFORMATIONS VOCALES DANS DES CELLULES MTA

(30) Priorität: 22.01.1997 DE 19702141
(43) Veröffentlichungstag der Anmeldung: 10.11.1999
(73) Patentinhaber: NOKIA SIEMENS NETWORKS GMBH & CO. KG, 81541 München (DE)
(72) Erfinder: HINTERBERGER, Christian, D-83607 Holzkirchen (DE)
(86) Internationale Anmeldenummer: PCT/DE1998/000108
(87) Internationale Veröffentlichungsnummer: WO 1998/033354

(56) Entgegenhaltungen:
- EP-A- 0 725 506
- US-A- 5 446 726

## Beschreibung

Die Erfindung betrifft ein Verfahren gemäß dem Oberbegriff des Patentanspruchs 1.

In Übertragungssystemen, die nach einem asynchronen Transfermodus (ATM-Modus) betrieben werden, werden die zu übertragenden Nachrichten in Nachrichtenzellen fester Länge übertragen. Dabei weisen die Nachrichtenzellen jeweils einen Informationsteil sowie einen Zellenkopf auf. Der Informationsteil dient zur Aufnahme der Nachrichten, während der dem Informationsteil vorangestellte Zellenkopf Information über die Zuordnung einer Nachrichtenzelle zu einer virtuellen Verbindung trägt. Üblicherweise weist der Zellenkopf eine Länge von 5 Oktetts und der Informationsteil eine Länge von 48 Oktetts auf.

Generell wird angestrebt, das universelle Kommunikationsnetz für Sprache, Text, Daten und Bild (ISDN) auf Basis des asynchronen Transfermodus der öffentlichen und privaten Netze zu realisieren. Dabei entsteht jedoch das Problem,daß beispielsweise die in der bisherigen Übertragungstechnik (Pulse Code Modulationstechnik PCM) übertragenen Sprachinformationen in Nachrichtenzellen eingebunden werden müssen und umgekehrt. Eine derartige Umsetzung muß - je nach Konfiguration und Einbindung des ATM-Kommunikationsnetzes - unter Umständen mehrfach durchgeführt werden.

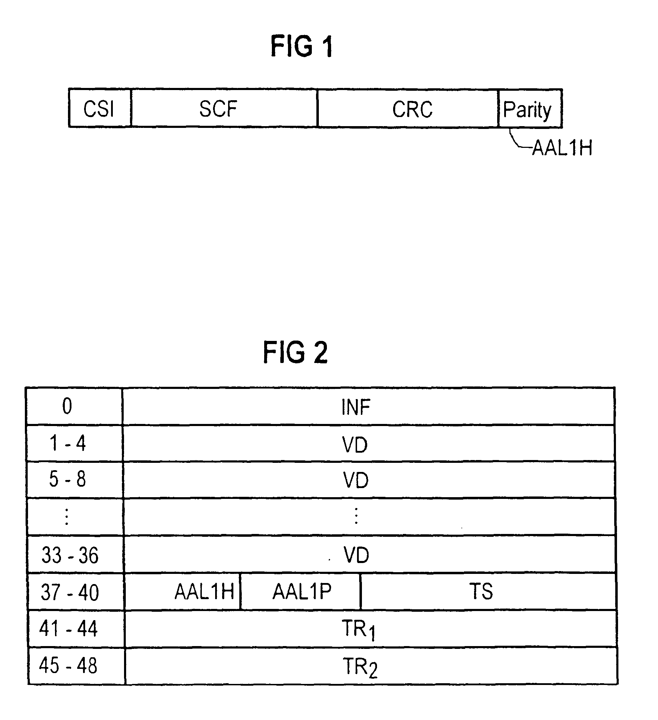

Die Einbindung von Sprachinformationen in ATM-Zellen ist gegenwärtig gemäß den Standardisierungen der ITU in dem AAL1 Adaptionsverfahren vorgesehen. Darin werden spezielle Eigenschaften der Sprachinformationen berücksichtigt. Hierzu werden in einem vorgesehenen Feld des Informationsteiles einer ATM-Zelle spezielle, 1 Byte breite Informationen, auch AAL1 Header genannt, abgelegt. Dies bedeutet, daß dem Informationsteil statt 48 Byte lediglich 47 Byte zur Übertragung von Nutzdaten (Sprachinformationen) zur Verfügung stehen. Die betreffenden Felder des AAL1 - Standards seien zur näheren Klarstellung nochmals in FIG 1, die später näher beschrieben wird, aufgezeigt.

Zur Einbindung und Übertragung anderer Informationsdaten sind weitere Adaptionsverfahren vorgesehen. Beispielsweise wird beim AAL5 Verfahren zur Einbindung und Übertragung dieser anderen Informationsdaten verwendet. Diese anderen Informationsdaten können beispielsweise Signalisierungsdaten, Computerdaten oder sonstige Nutzdaten sein. Da die in den gegenwärtigen, als Personal Computer ausgebildeten Endgeräten integrierten Netzkarten lediglich den AAL5 Standard unterstützen, wird angestrebt, Sprachinformationen mit Hilfe des AAL5 Standards zu übertragen.

Gegenwärtig existieren hierzu im ATM Forum im wesentlichen zwei Vorschläge, wie Sprachinformationen unter Verwendung des AAL5-Standards in ATM-Zellen eingebunden und übertragen werden können (ATM-Forum/96-0950, ATM-Forum/96-0955). Darin wird vorgesehen, die Oktetts 1 bis 40 bzw. 1 bis 32 des Informationsteils mit Sprachinformationen zu füllen. Die verbleibenden Oktetts bleiben dann speziellen Feldern wie den Feldern für Trailerdaten. In den Feldern für die Trailerdaten wird eine Quersumme (Checksum) und die Länge der zu übertragenden Datenpakete abgelegt. Weiterhin werden sonstige benutzerspezifische Informationen gespeichert.

Bei Verwendung dieser Vorschläge besteht jedoch das Problem, daß im Gegensatz zur Übertragung von Sprachinformationen gemäß dem AAL1 Standard, die speziellen Gegebenheiten von Sprachübertragungen hier nicht berücksichtigt werden. So kann beispielsweise der Fall auftreten, daß falls eine der ATM-Zellen während des Übertragungsvorganges verlorengeht, dieser Umstand gemäß dem AAL5-Standard nicht ohne weiteres ermittelt werden kann. Da dieser Standard lediglich der Datenübertragung allgemeiner Art dienlich ist, werden gegebenenfalls in einem zyklischen Zeitraster alle Daten im Endgerät gesammelt und einem umfangreichen Test unterzogen. Bei Computerdaten ist diese Vorgehensweise unkritisch, da hier eine zeitliche Verknüpfung im Sinne einer Online-Übertragung nicht gegeben ist. Insofern ist es ohne weiteres tolerierbar, eine fest vorgegebene Zeitspanne für diese Überprüfungstests anzusetzen und abzuwarten und später verlorengegangene Daten bedarfsweise von der Sendeeinrichtung wieder anzufordern.

Bei Sprachinformationen besteht jedoch hingegen das Erfordernis, daß die übertragenen Daten unmittelbar zwischen Sender und Empfänger ausgetauscht werden. Die noch bei Computerdaten vorgesehene fest vorgegebene Zeitspanne kann hier nicht abgewartet werden. Wenn somit Sprachinformationen nach dem Standard AAL5 zu übertragen sind, können somit die beim Stand der Technik geschilderten Verfahren nicht angewendet werden, da hier der Verlust von ATM-Zellen erst bei diesen umfangreichen Tests empfangsseitig festgestellt werden können, womit in der Praxis eine verminderte Sprachqualität verbunden ist.

Aus der US Patentschrift US 5,446,726 ist eine Vorrichtung zur Fehlerermittlung und Fehlerkorrektur für Informationen, die nach einem asynchronen Transfermodus (ATM) übertragen werden, bekannt. Hierbei werden insbesondere Überlastsituationen behandelt und gegebenenfalls korrigiert. Wie Sprachinformationen übertragen werden können, wird hier im Detail nicht angesprochen.

Aus der europäischen Patentanmeldung EP 0 725 506 A2 ist eine Vorrichtung und ein Verfahren zur Übertragung von Multmediadaten bekannt. Hierzu wird vorgeschlagen, Daten die nach dem MPEG2-layer definiert werden in der AAL5 ATM Adaption Layer zu übertragen. Allerdings wird auch hier nicht angegeben, wie Sprachinformationen im Detail übertragen werden können.

Der Erfindung liegt somit die Aufgabe zugrunde,einen Weg aufzuzeigen, wie Sprachinformationen effizient in ATM-Zellen nach einem nicht spezielle Gegebenheiten für Sprachübertragungen berücksichtigende Standard übertragen werden können.

Die Erfindung wird ausgehend von den im Oberbegriff des Patentanpsruchs 1 angegebenen Merkmalen durch die kennzeichnenden Merkmale gelöst.

Vorteilhaft an der Erfindung ist insbesondere, daß spezielle Informationen bezüglichder Übertragung von Sprachinformationen in einem Teil der Oktetts des Informationsteils eingefügt werden. Vorteilhafterweise erfolgt dies, indem die im AAL1-Standard verwendeten Felder des AAL1 Headers eingebunden werden. Damit ist der Vorteil verbunden, daß die Vorteile gemäß dieses Standards mit denjenigen des AALS-Standard verknüpft werden. Hierzu gehören beispielsweise das Ermitteln eines Verlustes einer ATM-Zelle.

Vorteilhafte Ausgestaltungen der Erfindung sind in den Unteransprüchen angegeben.

Gemäß Anspruch 2 ist vorgesehen,daß empfängerseitig nach Maßgabe der Informationen bezüglich spezieller Gegebenheiten der Übertragung von Sprachinformationen der Verlust von Sprachinformationen tragende ATM-Zellen ermittelt wird und fehlerhaft eingefügte ATM-Zellen identifiziert werden.

Gemäß Anspruch 3 ist vorgesehen, daß die Informationen bezüglich spezieller Gegebenheiten der Übertragung von Sprachinformationen in die Oktetts 37 bis 40 eingefügt werden.

Gemäß Anspruch 4 ist vorgesehen, daß im Verlustfall wenigstens einer Sprachinformationen tragende ATM-Zelle zusätzliche ATM-Zellen gebildet und anstelle derselben der empfangenden Einrichtung zugeführt werden. Damit wird sichergestellt, daß beim Verlust von ATM-Zellen soviele ATM-Zellen eingefügt werden, wie ATM-Zellen verlorengehen.

Gemäß Anspruch 5 ist vorgesehen, daß die Informationen bezüglich spezieller Gegebenheiten der Übertragung von Sprachinformationen einen Pointer aufweisen, der auf die Anfangsadresse des zu übertragenden Datenblockes in der ATM-Zelle deutet. Damit ist der Vorteil verbunden, daß im Sinne des AAL1 Standards strukturierter Datentransfer für N x 64 kBit/s durchgeführt werden kann.

Gemäß Anspruch 6 ist vorgesehen, daß die Informationen bezüglich spezieller Gegebenheiten der Übertragung von Sprachinformationen gegebenenfalls Informationen enthalten, in denen Zeitinformationen abgelegt sind. Diese können beispielsweise als lokale Uhrzeit ausgebildet sein.

Die Erfindung wird im folgenden anhand eines Ausführungsbeispiels näher erläutert.

Es zeigen
- FIG 1: die gemäß des des AAL1-Standards verwendeten Informationen,
- FIG 2: das erfindungsgemäße Verfahren,

In Fig. 1 ist beispielhaft ein Feld AAL1H vorgesehen. Dabei handelt es sich um das beim AAL1 Standard verwendete AAL1 Header-Feld. Das Feld AAL1H wird in die Felder CSI, SCF, CRC sowie PARITY unterteilt. Im Feld CSI (convergence sublayer identification, CSI) ist eine 1 Bit breite Information vorgesehen, mittels der dem empfangenden Endgerät signalisiert werden kann, ob eine Synchronosierung mit sendeseitigen Takt vorzunehmen ist. Weiterhin ist das 3 Bit breite Feld SCF (sequence bound field) vorgesehen, indem quasi eine Folgenummer der zu übertragenden ATM-Zellen abgelegt ist. Wenn beispielhaft eine der Zellen während des Übertragungsvorgangs verloren geht, wird anhand dieser Nummer das Fehlen vermerkt. Ein weiteres, ebenso drei Bit breites Feld CRC (cyclic redundancy check) dient der Korrektur von ein Bit-Fehlern, während das letzte ein Bit breite Feld PARITY als Partätsbit fungiert. Die im Feld AAL1H abgelegten Informationen sind damit den speziellen Eigenheiten der Übertragung von Sprachinformationen angepaßt.

Fig. 2 zeigt das Format der Übertragung der Sprachinformationen unter Verwendung des AAL5 Standards gemäß dem erfindungsgemäßen Verfahren. Hierbei sind 2 Spalten aufgezeigt. In der linken Spalte sind die im Informationsteil durchnummerierten Oktetts O augezeigt, während die rechte Spalte den Informationsteil INF offenbart.

Wie Fig. 2 entnehmbar ist, werden die Oktetts 1 bis 36 mit den eigentlichen Sprachinformationen VD als Nutzinformationen belegt. In den Oktetts 37 bis 40 werden nun erfindungsgemäß die Informationen bezüglich spezieller Gegebenheiten der Übertragung von Sprachinformationen abgelegt. Im wesentlichen handelt es sich dabei um den 8 Bit breiten AAL1 Header AAL1H gemäß Fig. 1. Im weiteren ist hier noch ein Feld AAL1P vorgesehen, das als Pointer analog dem Pointer gemäß dem AAL1 Standard für Structured Data Transfer zu sehen ist und ebenfalls eine Breite von 8 Bit aufweist. Im verbleibenden, 2 Byte breiten Feld TS sind gegebenenfalls Time stamps zu übertragen, in denen Zeitinformationen wie die lokale Uhrzeit gespeichert sind. In den Feldern TR₁ und TR₂ sind die Trailerdaten bzgl. des AAL5 Standards abzulegen.

## Patentansprüche

1. Verfahren zum Übertragen von Sprachinformationen in ATM-Zellen, mit
Informationsdaten, die Sprachinformationen (VD) darstellen und in ATM-Zellen nach Maßgabe des AAL5-Standards in den Informationsteil von ATM-Zellen (1-36 von 1-40) eingebunden sind,
**dadurch gekennzeichnet,**
**daß** in einem Teil (37-40) des Informationsteiles (1-40) der die Informationsdaten aufnehmenden ATM-Zellen Informationen bezüglich spezieller Gegebenheiten der Übertragung von Sprachinformationen (AAL1H, AAL1P, TS) gemäß einem weiteren ATM-Adaptionsstandards aufgenommen werden.

2. Verfahren nach Anspruch 1,
**dadurch gekennzeichnet,**
**daß** empfängerseitig nach Maßgabe der Informationen bezüglich spezieller Gegebenheiten der Übertragung von Sprachinformationen der Verlust von Sprachinformationen tragende ATM-Zellen ermittelt wird und fehlerhaft eingefügte ATM-Zellen identifiziert werden.

3. Verfahren nach Anspruch 1 oder 2,
**dadurch gekennzeichnet,**
**daß** die Informationen bezüglich spezieller Gegebenheiten der Übertragung von Sprachinformationen in die Oktetts 37 bis 40 eingefügt werden.

4. Verfahren nach Anspruch 1 bis 3,
**dadurch gekennzeichnet,**
**daß** im Verlustfall wenigstens einer Sprachinformationen tragende ATM-Zelle zusätzliche ATM-Zellen gebildet und anstelle derselben der empfangenden Einrichtung zugeführt werden.

5. Verfahren nach einem der vorstehenden Ansprüche,
**dadurch gekennzeichnet,**
**daß** die Informationen bezüglich spezieller Gegebenheiten der Übertragung von Sprachinformationen einen Pointer (AAL1P) aufweisen, der auf die Anfangsadresse des zu übertragenden Datenblockes in der ATM-Zelle deutet.

6. Verfahren nach einem der vorstehenden Ansprüche,
**dadurch gekennzeichnet,**
**daß** die Informationen bezüglich spezieller Gegebenheiten der Übertragung von Sprachinformationen gegebenenfalls Informationen (TS) enthalten, in denen Zeitinformationen abgelegt sind.

## Claims

1. A method for transmitting information in ATM cells, having information data that represents voice information (VD) and which is incorporated in ATM cells, in terms of the AAL5 standard, in the information section of ATM cells (1-36 of 1-40),
**characterised in that**
information relating to special factors for the transmission of voice information (AAL1H, AAL1P, TS) is accommodated in keeping with a further ATM adaptation standard in a part (37-40) of the information section (1-40) of the ATM cells accommodating the information data.

2. The method as claimed in claim 1
**characterised in that**
in terms of the information relating to special factors for the transmission of voice information, the loss of ATM cells carrying voice information is determined and incorrectly inserted ATM cells are identified on the receiving side.

3. The method as claimed in claim 1 or 2
**characterised in that**
the information relating to special factors for the transmission of voice information is inserted in octets 37 to 40.

4. The method as claimed in claims 1 to 3
**characterised in that**
additional ATM cells will be formed if at least one ATM cell carrying voice information is lost and will be routed in place thereof to the receiving device.

5. The method as claimed in one of the preceding claims
**characterised in that**
the information relating to special factors for the transmission of voice information has a pointer (AAL1P) pointing in the ATM cell at the start address of the data block requiring to be transmitted.

6. The method as claimed in one of the preceding claims
**characterised in that**
the information relating to special factors for the transmission of voice information contains, where applicable, information (TS) in which is stored time information.

## Revendications

1. Procédé pour transmettre des informations vocales dans des cellules ATM, comprenant
des données d'information qui représentent des informations vocales (VD) et sont intégrées dans des cellules ATM de la norme AAL5, dans la partie d'information de cellules ATM (1-36 de 1-40),
**caractérisé en ce**
**que** dans une partie (37-40) de la partie d'information (1-40) des cellules ATM recevant les données d'information, des informations concernant des caractéristiques spéciales de la transmission d'informations vocales (AAL1H, AAL1P, TS) sont enregistrées selon une autre norme d'adaptation ATM.

2. Procédé selon la revendication 1,
**caractérisé en ce**
**que** la perte de cellules ATM portant des informations vocales est détectée côté récepteur selon les informations concernant des caractéristiques spéciales de la transmission d'informations vocales et en ce que les cellules ATM insérées de manière erronée sont identifiées.

3. Procédé selon la revendication 1 ou 2,
**caractérisé en ce**
**que** les informations concernant des caractéristiques spéciales de la transmission d'informations vocales sont insérées dans les octets 37 à 40.

4. Procédé selon les revendications 1 à 3,
**caractérisé en ce**
**qu'**en cas de perte d'au moins une cellule ATM portant des informations vocales, des cellules ATM supplémentaires sont formées et amenées au dispositif récepteur au lieu de celle-là.

5. Procédé selon l'une quelconque des revendications précédentes,
**caractérisé en ce**
**que** les informations concernant des caractéristiques spéciales de la transmission d'informations vocales présentent un indicateur (AAL1P) qui indique l'adresse de début du bloc de données à transmettre dans la cellule ATM.

6. Procédé selon l'une quelconque des revendications précédentes,
**caractérisé en ce**
**que** les informations concernant des caractéristiques spéciales de la transmission d'informations vocales contiennent éventuellement des informations (TS), dans lesquelles des informations de temps sont mémorisées.
